# EUROPEAN PATENT APPLICATION

(11) **EP 1 233 553 A2**
(43) Date of publication of application: **21.08.2002**
(21) Application number: 02003158.9
(22) Date of filing: 15.02.2002
(51) Int. Cl.: H04B 10/207

(54) **Pre-splitter module for conditioning optical signals in an optical network**

(30) Priority: 15.02.2001 US 784287
(71) Applicant: Alcatel USA Sourcing, L.P., Plano, Texas 75075-5813 (US)
(72) Inventor: Redmond, Robert W., Petaluma, California 94954 (US)
(74) Representative: Dreiss, Fuhlendorf, Steimle & Becker

(57) **Abstract**

A pre-splitter module for conditioning optical signals in an access network. The pre-splitter is operable to condition the optical signals received from an optical fiber amplifier into a plurality of waveguides. A plurality of splitters are coupled to the waveguides emanating from the pre-splitter. Each splitter is operable to condition the optical signal that it receives into a second plurality of waveguides. In an exemplary embodiment, the optical transmission system includes a wavelength division multiplexer (WDM) array coupled to the splitter and another source. At least one access waveguide is associated with the WDM array for multiplexing two optical signals of different wavelengths. The access waveguide is in turn coupled to an optical network unit.

## Description

### BACKGROUND OF THE INVENTION

### Technical Field of the Invention

The present invention generally relates to components used in fiber optic signal transmission systems and, in particular, to a pre-splitter used to optimally utilize such transmission systems in an access network.

### Description of Related Art

As networks face increasing bandwidth demand and diminishing fiber availability in the existing fiber plant, network providers are migrating towards a new network technology called the optical network. Optical networks are high-capacity telecommunications networks comprised of optical and opto-electronic technologies and components, and provide wavelength-based services in addition to signal routing, grooming, and restoration at the wavelength level. These networks, based on the emergence of the so-called optical layer, operating entirely in the optical domain in transport networks, can not only support extraordinary capacity (up to terabits per second (Tbps)), but also provide reduced costs for bandwidth-intensive applications such as the Internet, interactive video-on-demand and multimedia, and advanced digital services.

In many locations, optical fibers have been deployed for transmitting digital telephony signals, such as signals carrying telephone conversations, facsimile transmissions or Internet data communications. The low loss of signal (light) over distance, and the reflective nature of the transmission make optical fibers an excellent medium for data transmission and networking. Additionally, because of its large information-carrying capacity (bandwidth), optical fibers are suitable for transmitting even high information content signals including full motion video.

Optical fibers composed of silica have three useful transmission bands located at about 850, 1310 and 1550 nanometers (nm). The existence of these bands is partly a function of the characteristics of the fiber itself, including such factors as the amount of optical absorption and dispersion within the fiber at different wavelengths, and partly a function of practical limitations on the availability of suitable devices, such as lasers and LED's, used for coupling light into the fiber at different wavelengths. As a result of these and other factors, it is currently most practical, at least for the purposes of digital telephony, to transmit either within the 1310 nm band or the 1550 nm band. The 850 band is typically not used for digital telephony.

Of the several key enabling technologies necessary for the successful deployment of optical networks, wavelength division multiplexing (WDM) has emerged as a crucial component for facilitating the transmission of diverse payloads regardless of their bit-rate and format over the optical layer. Wavelength division multiplexing increases the capacity of embedded fiber by first assigning incoming optical signals to specific wavelengths within a designated frequency band (i.e., channels separated by a predetermined spacing) and then multiplexing the resulting signals out onto a single fiber. Since incoming signals are not terminated in the optical layer, the interface is bit-rate and format independent, allowing service/network providers to integrate the wavelength division multiplexing technology with existing equipment in the network. Accordingly, by combining multiple optical signals using wavelength division multiplexing, they can be amplified as a group and transported over a single fiber to increase capacity in a cost-effective manner.

In order to fully utilize the capabilities of an optical network and to overcome what is commonly referred to as the "last mile problem" in the telecommunications art, optical access from end users, i.e., homes, offices, other buildings, etc., to the network is necessary. In an access architecture known as Fiber To The Curb (FTTC), an optical fiber may interconnect a host digital terminal (HDT) of an access provider (such as a telephone company) with a curbside optical network unit (ONU). The HDT provides an interface between the optical fiber and the various components of the access provider's central office (CO). The ONU provides an interface between the HDT and an end user (customer premises). Usually only a single optical fiber is deployed between the CO and the ONU which carries both upstream and downstream digital telephony signals (i.e., signals sent from the ONU to the HDT as well as signals sent from the HDT to the ONU).

The FTTC architecture is standardized under Bellcore Document TR 909. In one aspect, TR 909 requires that signals transmitted outside of the service/access provider's plant to an ONU retain a predetermined power level (measured in decibels (dB)). This is commonly referred to as the power budget requirement. Further, whereas TR 909 allows for the deployment of various components from different third-party vendors, the optical transmission system formed therefrom must still satisfy the outside plant's overall power budget. Although the requirements pertain specifically to the transmission of telephony signals, they may also apply to other information signals transmitted in appropriate optical carrier bands on a single optical fiber. For instance, advances in WDM technology have allowed for the transmission of both digital telephony signals and analog video (AV) signals on a single optical fiber. Consequently, AV signals such as those provided by cable television (CAT) companies can now be transmitted in an all-optical access network from the HDT to the ONU for subsequent routing into homes or offices and optical transmission systems operable to carry such AV signals must satisfy the power budgets imposed on the access network.

Presently, the existing solutions for implementing the FTTC architecture are beset with various deficiencies and shortcomings. Traditional optical signal transmission systems with high count split ratios typically use a single 1-by-n symmetric splitter with a fixed split ratio. When changes occur, such as changes in outside plant loss, changes in optical fiber amplifier (OFA) capabilities, the deployment of enhanced receivers that do not require as much power, and so on, the entire system must be overhauled (i.e., splitters currently deployed are replaced by splitters that have the requisite split ratio, and so on). The same architectural overhaul is required when coupling to a larger number of ONUs (and subsequently, a greater number of end users) is desired. The end result is a highly inflexible system that is not at all conducive to scalability.

Furthermore, a high degree of architectural customization is necessary for optical transmission systems that have different power budget requirements. Since splitters receiving signals with a higher power level would require a different split ratio than a splitter receiving signals with a lower power level, an access provider employing multiple systems would be required to purchase a plurality of different splitters with different split ratios. Thus, economies of scale advantages are frustrated because of the access provider's inability to make a bulk purchase of, and deploy, splitters that possess the same split ratio.

### SUMMARY OF THE INVENTION

Accordingly, the present invention advantageously provides a pre-splitter module for conditioning optical signals in an access network in order to overcome these and other aforementioned drawbacks of the conventional optical access solutions. The pre-splitter is operable to condition the optical signals that it receives from an optical fiber amplifier into a plurality of waveguides. A plurality of splitters are coupled to the waveguides emanating from the pre-splitter. In turn, each splitter is operable to condition the optical signal that it receives into a second plurality of waveguides. The pre-splitter itself can be detachable, asymmetric, and may possess a number of different split ratios.

In one exemplary embodiment, the optical transmission system integrates two optical signals of different wavelengths in an access network. The system is comprised of a pre-splitter that conditions an optical carrier signal into a plurality of waveguides, coupled to at least one splitter that conditions the waveguide it receives into a second plurality of waveguides. A fiber bank is provided for sourcing a second optical carrier signal onto a third plurality of waveguides. A wavelength division multiplexer (WDM) array coupled to the splitter and fiber bank multiplexes the first and second optical carrier signals it receives onto at least one access waveguide. The access waveguide in turn, is coupled to an optical network unit (ONU).

In another exemplary embodiment, the pre-splitter is coupled to an integrated multiplexer module that combines multiple WDM components into an array which is integrally coupled to a splitter for merging point-to-multipoint signals with point-to-point signals in a common optical medium. The splitter component of the integrated WDM/splitter multiplexer module is operable to condition the point-to-multipoint signals it receives into a plurality of waveguides organized as a first ribbon fiber. The WDM array component is spliced to this first ribbon fiber, preferably by means of a ribbon-to-ribbon splicer ("ribbon splicer"). Additionally, a fiber bank is operable to source the point-to-point signals onto a second ribbon fiber. This second ribbon fiber is also spliced onto the WDM array using a ribbon splicer.

In a further aspect, the present invention is directed to a method of combining two optical carrier signals with different wavelengths onto a common access waveguide at a predetermined output power level.

### BRIEF DESCRIPTION OF THE DRAWINGS

A more complete understanding of the present invention may be had by reference to the following Detailed Description when taken in conjunction with the accompanying drawings wherein:
FIG. 1 depicts a functional block diagram of an exemplary embodiment of a telecommunications network having an access network portion wherein the teachings of the present invention may be advantageously practiced;
FIG. 2 depicts a functional block diagram of an exemplary embodiment of an optical transmission system within the access network provided in accordance with the teachings of the present invention;
FIG. 3 depicts a functional block diagram of a second exemplary embodiment of an optical transmission system within the access network provided in accordance with the teachings of the present invention;
FIG. 4 depicts a functional block diagram of a third exemplary embodiment of an optical transmission system within the access network provided in accordance with the teachings of the present invention;
FIG. 5 depicts a functional block diagram of an exemplary embodiment of a host digital terminal (HDT) within the access network with a pre-splitter coupled to an integrated WDM/splitter multiplexer module for combining digital telephony signals with analog video signals; and
FIG. 6 is a flow chart of a process to combine two optical carrier signals with different wavelengths onto a common access wave guide at a predetermined power level in accordance with the teachings of the present invention.

### DETAILED DESCRIPTION OF THE DRAWINGS

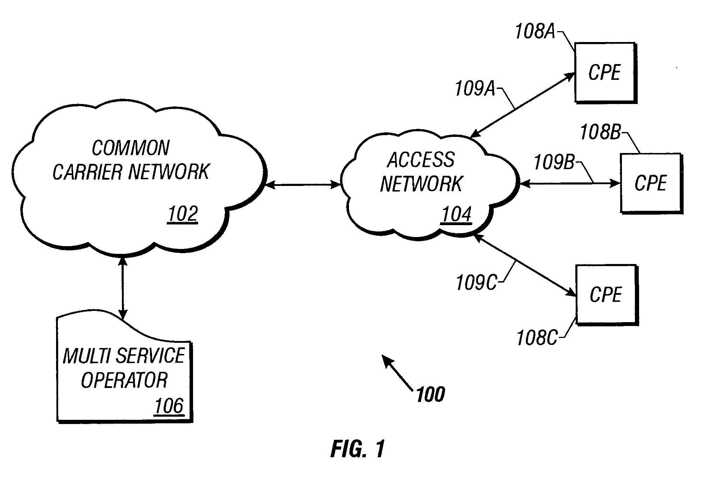

In the drawings, like or similar elements are designated with identical reference numerals throughout the several views thereof, and the various elements depicted are not necessarily drawn to scale. Referring now to FIG. 1, depicted therein is a functional block diagram of an exemplary embodiment of a telecommunications network 100 having an access network portion 104 that is provided between a high-speed common carrier network 102 (i.e., "backbone") and the customer premises equipment (CPE) units 108A-C provided at a customer's premises. A multi-service operator (MSO) 106, coupled to the common carrier network core 102, is illustrative of a service provider with various services that may be accessed via CPE units 108A-108C.

Those skilled in the art should readily appreciate upon reference hereto that the telecommunications network 100 of FIG. 1 is illustrative of a network that provides a bidirectional end-to-end connection using one or more optical fiber paths.

The common carrier network 102 is the part of the communications network 100 which carries the heaviest traffic at the highest speeds. Speeds of signals transmitted on the fiber cables of the common carrier network 102 can be measured in the gigabits per second range. The common carrier network 102 is also designed to connect to lower speed channels or clusters of the local access network 104.

The smaller access network 104 may represent several local access providers or a single provider. The signals on this network are transmitted at a slower (e.g., megabits per second) rate. In an exemplary embodiment, the access network 104 consists of a network operable to transmit either point-to-point information signals such as digital telephony signals or point-to-multipoint information signals, such as analog video (AV) signals, over a single optical fiber to a customer's premises (i.e., a subscriber's home or office). Within the customer's premises there may be one or more CPE units 108A-108C (which could be a personal computer, television, telephone, multimedia terminal, and the like) to access the services provided by MSO 106. Reference numerals 109A-109C refer to exemplary fiber paths serving individual CPEs 108A-108C, respectively.

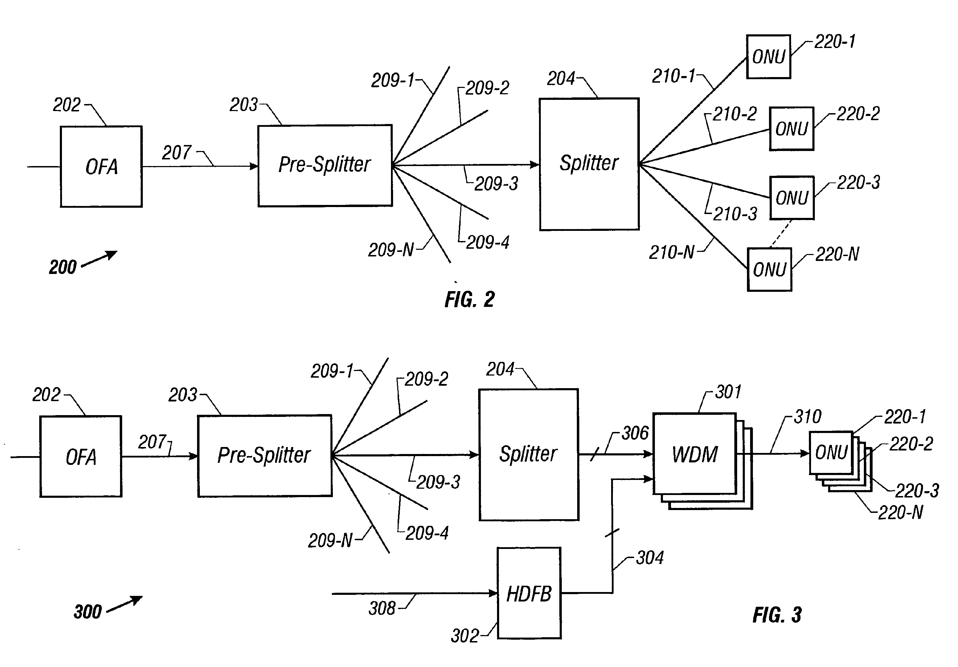

FIG. 2 depicts a functional block diagram of an exemplary embodiment of an optical transmission system 200 within the access network 104 with a pre-splitter 203 of the present invention coupled to a splitter 204. In an exemplary implementation, an optical fiber amplifier (OFA) 202 transmits an optical signal on an egress waveguide 207 to the pre-splitter 203. OFA 202 functions to amplify the optical signal to suitable levels in order to meet applicable out-of-plant power budgets. A given OFA (i.e., OFA 202) has a specific amplification level, generally +18 dB mV, +20 dB mV, +27 dB mV, or more. The desired amplification level of an OFA will typically depend on the required out-of-plant power budget requirement of the signal being transmitted. Normally, the greater an OFA's amplification level the higher its cost.

The pre-splitter 203 is operable to condition the signal it receives into a plurality of waveguides (reference numeral 209-1 through 209-N). The number of waveguides that depart from the pre-splitter depend on the pre-splitter's split ratio (i.e., 1:4, 1:8, 1:16, and so on). Further, the pre-splitter 203 may be configured either symmetrically or asymmetrically. In a symmetrical arrangement, each waveguide departing the pre-splitter will transmit the signals it receives at the same output power level. If the pre-splitter is asymmetrically configured, waveguides departing the pre-splitter can transmit signals at different power levels from one another (i.e., the signals on waveguide 209-1 may be transmitted at 5 decibels (dB) while the signals traveling on waveguide 209-4 may be transmitted at 10 dB).

Moreover, the pre-splitter 203 may be detachable. This would allow the architecture of the optical transmission system, but for the pre-splitter, to be left intact. A pre-splitter (i.e., pre-splitter 203) may be replaced by a second pre-splitter for a number of reasons, such as changes in OFA capabilities, outside plant power losses, improved receivers that do not require as much optical power, and so on.

The splitter 204 is operable to condition an incoming waveguide (reference numeral 209-3) into a plurality of waveguides (reference numerals 210-1 through 210-N). Further, the splitter 204 is operable at a specific split ratio (i.e., 1:4, 1:8, 1:16, and so on). Although not shown, the plurality of waveguides (reference numeral 209-1 through 209-N) emanating from the pre-splitter 203 may be coupled to a corresponding number of splitters. Additionally, the pre-splitter 203 and the splitter 204, (or the pre-splitter 203 and a plurality of splitters) can be formed into an integrated module.

Individual waveguides (reference numeral 210-1 through 210-N) egress the splitter and interconnect with a curbside optical network unit (ONU). Reference numerals 220-1 through 220-N exemplify a plurality of such ONUs interfacing with the splitter 204. Each ONU provides an interface between the optical fiber and the CPEs of homes and offices.

FIG. 3 depicts a functional block diagram of a second exemplary embodiment of an optical transmission system 300 within the access network 104 with the pre-splitter 203 and the splitter coupled to a wavelength division multiplexer 301. As has been described hereinabove, optical signals operable in a first transmission band are received by the pre-splitter 203 from the OFA 202. The pre-splitter 203 conditions these signals into a plurality of waveguides (reference numerals 209-1 through 209-N). The splitter 204 conditions the signals it receives from the pre-splitter 203 into a second plurality of waveguides 306. The specific number of waveguides which make up such a plurality is a function of the split ratio of the splitter (i.e., 16 waveguides from a splitter with a 1:16 split ratio).

An optical fiber 308 operable to carry signals in a second transmission band is received by one or more high density fiber banks (HDFBs) (i.e., HDFB 302), of the local access provider in order to be fanned out to multiple egress paths. A plurality of waveguides (reference numeral 304) emanating from HDFB 302 and the plurality of waveguides 306 emanating from the splitter 204 are received by a wavelength division multiplexer (WDM) component 301. Typically, each incoming waveguide is fusion spliced to an individual WDM component. As pointed out earlier, each of the aforementioned pluralities of waveguides transmits signals that have different wavelengths. The WDM 301 increases the capacity of an access waveguide 310 by multiplexing different wavelengths through the same fiber. As a result, individual access waveguides (i.e., access waveguide 310) may simultaneously carry optical signals operating at two different wavelengths. The access waveguide 310 interconnects with a curbside ONU (reference numerals 220-1 through 220-N).

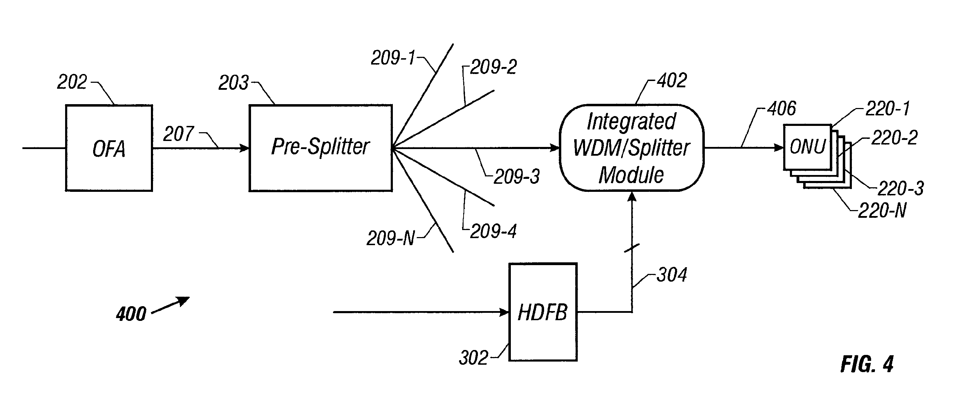

FIG. 4 depicts a functional block diagram of a third exemplary embodiment of an optical transmission system 400 within the access network 104 with the pre-splitter 203 coupled to an integrated WDM/splitter multiplexer module 402. A plurality of waveguides (reference numeral 304) emanating from HDFBs (i.e., HDFB 302) and a waveguide (i.e., waveguide 209-3) emanating from the pre-splitter 203 are received by the integrated module 402. Optical signals of different wavelengths originating from the pre-splitter 203 and the HDFB 302 are consequently accommodated by the integrated module 402.

The splitter component of the integrated module 402 is operable to condition the signals it receives into a plurality of waveguides organized as first and second ribbon fibers. In a preferred embodiment, a split ratio of 1:16 may be maintained by the splitter since this is a well developed technology. Each ribbon fiber coupled to the splitter may be comprised of 8 waveguides, accordingly.

Continuing to refer to FIG. 4, a WDM array component of the integrated module 402 is operable to provide an effective MUX ratio of 2:1. That is, any two input signals, each operating in a different band can be multiplexed onto a single outgoing waveguide. Accordingly, the WDM array component may be comprised of a plurality of separate 2:1 WDMs organized into an integrated array. The WDM array is spliced to each ribbon fiber arriving from the splitter component with ribbon splicers.

Optical signals are sourced from HDFB 302 onto third and fourth ribbon fibers collectively labeled as reference numeral 304. Each ribbon fiber is preferably comprised of 8 waveguides. The WDM array is spliced to each of these ribbon fibers with ribbon splicers as well. The WDM array multiplexes the two input signals operating in different bands onto a single access waveguide 406 and interconnects with a curbside ONU, e.g., ONU 220-1 through ONU 220-N, for subsequent fan-out.

In a presently preferred exemplary embodiment of the present invention, the integrated module 402 and the pre-splitter 203 form an individual pre-splitter/multiplexer module. Furthermore, this module is comprised of a silicon planar light wave circuit (PLC) in order to take advantage of the step-and-print photolithography processes used in semiconductor fabrication. Additionally, the pre-splitter may be detached from the rest of the module.

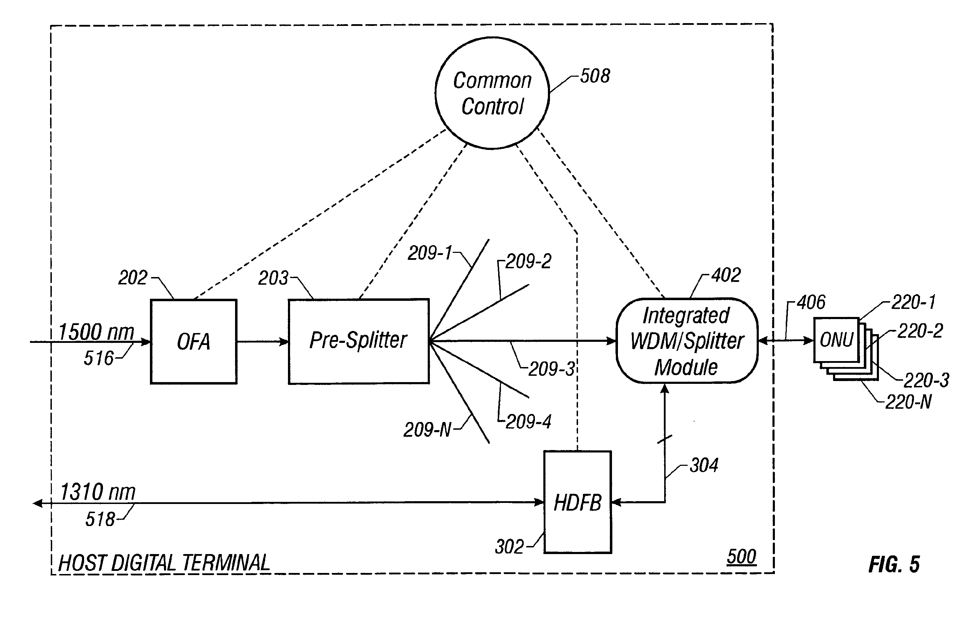

FIG. 5 depicts a functional block diagram of an exemplary embodiment of a host digital terminal (HDT) 500 within the access network 104 with the pre-splitter 203 coupled to the integrated WDM/splitter multiplexer module 402 for combining digital telephony signals with analog video signals in accordance with the teachings of the present invention.

HDT 500 is preferably located in a central office of a service/access provider. Within HDT 500, a common control 508 operates to provide overall control, maintenance and management with respect to the constituent components of HDT 500. In an exemplary implementation, a first optical fiber 516 operable in the 1550 nm band transmits AV signals downstream to HDT 500. Those skilled in the art should readily recognize that the AV signals are representative of a particular type of point-to-multipoint signals that can be transmitted over an optical medium in the 1550 nm band. The 1550 nm signal is received by OFA 202 of HDT 500.

A second optical fiber 518 operable in the 1310 nm band transmits bidirectional (i.e., traveling both upstream and downstream) digital telephony signals (wherein the telephony signals represent a particular type of point-to-point signals). The 1310 nm signal transmitted downstream is received by one or more HDFBs (i.e., HDFB 302) of the local access provider in order to be fanned out to multiple egress paths.

Continuing to refer to FIG. 5, a plurality of waveguides (reference numeral 304) arriving from HDFB 302 and a waveguide (reference numeral 209-3) arriving from the pre-splitter 203 are received by the integrated multiplexer module 402. Consequently, optical signals operating in both 1550 nm and 1310 nm bands are accommodated by the integrated module 402.

A plurality of bidirectional access waveguides are operable with the integrated module 402 for transmitting multiplexed optical signals thereto and therefrom. As pointed out in the foregoing, the WDM component of the integrated multiplexer module 402 increases the capacity of each access waveguide (i.e., access waveguide 406) by multiplexing different wavelengths through the same fiber. As a result, each separate waveguide may simultaneously carry optical signals operating at wavelengths of both 1550 nm and 1310 nm, thus allowing both upstream and downstream digital telephony signals and AV signals to be carried over a single optical fiber. Individual optical fibers operable with wavelengths of both 1550 nm and 1310 nm exit HDT 500 from the integrated module 402, and interconnect with a curbside ONU (reference numerals 220-1 through 220-N).

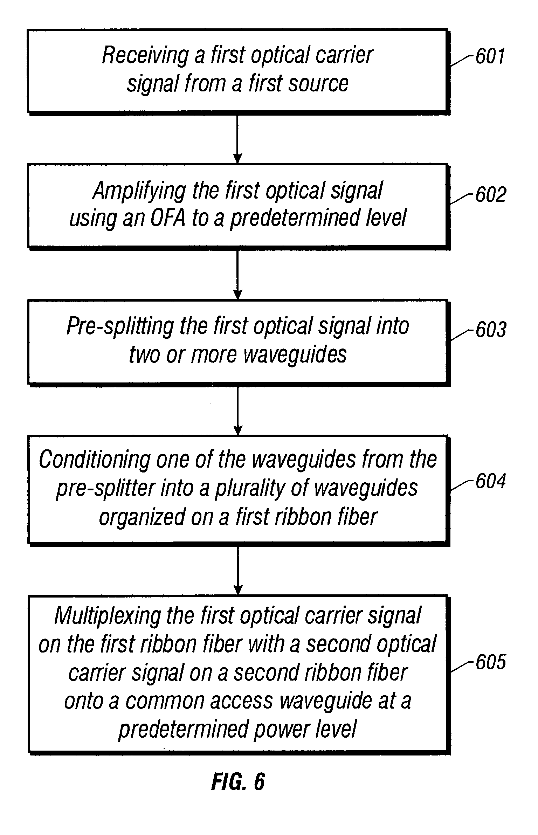

FIG. 6 is a flow chart of an exemplary process to combine two optical carrier signals with different wavelengths onto a common access wave guide at a predetermined power level in accordance with the teachings of the present invention. Upon receiving a first optical carrier signal from a first source (such as the common carrier network)(step 601), the signal is amplified to a predetermined level by utilizing an OFA having the requisite amplification power (step 602). The optical signal is then pre-split by a pre-splitter operable to condition the aforementioned signal into at least 2 waveguides (consequently, the pre-splitter has at least a 1:2 split ratio) (step 603). At least one waveguide departing the pre-splitter is conditioned into a second plurality of waveguides organized onto a first ribbon fiber (step 604). This second split can be undertaken with a splitter, a second pre-splitter, and so on.

A second optical carrier signal is received from a second source (such as the common carrier network, an HDFB of an access provider, and so on) and is disposed on a second ribbon fiber (step 605). Both first and second optical carrier signals are multiplexed (i.e., by a WDM, or any other method) onto a common access waveguide at a predetermined output power level (step 605).

Considerations in determining the requisite power level to an ONU typically hinge on power budget requirements as set forth in Bellcore Document TR 909. Further, known power losses through the pre-splitter, splitter and WDM must be factored as well. Since the pre-splitter can be asymmetrically configured, waveguides departing the pre-splitter can transmit signals with different power levels from one another, which results in greater flexibility and efficiency in meeting the power budget requirement.

Based upon the foregoing Detailed Description, it should be readily apparent that the present invention provides an innovative solution for conditioning optical signals without the shortcomings and deficiencies of the conventional system set forth in the Background section of the present patent application.

The utilization of a pre-splitter in any optical signal transmission system in accordance herewith allows that system to be more flexible, scalable and cost efficient. Since the pre-splitter can be asymmetrically configured, each pre-split waveguide can transmit signals at different power levels from one another. More splitters or multiplexers can be added to the system which, in turn, translates into more ONU's and ultimately more end users connected. Further, an increase in the number of end users can be obtained without having to replace the existing OFA with an OFA with greater amplification power in order to meet power budget requirements. Since the cost of an OFA increases with amplification power, monetary savings may advantageously be realized thereby. As a result, a more scalable optical transmission system can be developed that optimizes the use of its OFA components while still meeting the outside plant power budget requirement.

In addition, an optical transmission system that employs a pre-splitter can be 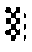 front-end tuned 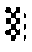 since the pre-splitter can be detached. A given system may have to be upgraded for a number of reasons (i.e., changes in OFA capabilities, outside plant power losses, improved receivers that do not require as much optical power, the desire to add more ONUs, and so on). Rather than removing the splitter(s) and reconfiguring the entire system (as is the case with present systems), the splitter(s) can be reused with only the pre-splitter being replaced. This results in a greater level of flexibility, in that the architecture of the system, but for the pre-splitter, can be left intact.

Furthermore, economies of scale can be realized with a pre-splitter driven optical transmission system. Different transmission systems that have OFAs with different amplification levels may still employ splitters or multiplexer modules that have the same split ratio. For example, one portion of the access network may be required to use an OFA with a particular amplification level, while another may prefer to utilize an OFA with a different amplification level. Consequently, both portions can be accommodated in the same network with splitters or multiplexer modules that possess the same split ratio. The pre-splitter is the only component that differs in either optical transmission system. As a result, the splitter or multiplexer module price can be kept down by deploying them in volume.

It is believed that the operation and construction of the present invention will be apparent from the foregoing Detailed Description. While the system and process shown and described have been characterized as being preferred, it should be readily understood that various changes and modifications could be made therein without departing from the scope of the present invention as set forth in the following claims. Accordingly, all such modifications, alterations, combinations, amendments, and the like should be deemed to be within the ambit of the present invention whose scope is defined solely by the claims set forth immediately hereinbelow.

## Claims

1. A system for transmitting optical signals in an access network, comprising:
a pre-splitter operable to condition said optical signals into a first plurality of waveguides; and
a plurality of splitters coupled to said first plurality of waveguides, wherein said plurality of splitters are operable to condition said optical signals carried on said first plurality of waveguides into a second plurality of waveguides.

2. The system for transmitting optical signals in an access network as set forth in claim 1, wherein said pre-splitter receives said optical signals from an optical fiber amplifier (OFA).

3. The system for transmitting optical signals in an access network as set forth in claim 2, wherein said pre-splitter is detachable.

4. The system for transmitting optical signals in an access network as set forth in claim 2, wherein each of said plurality of splitters has a 1:16 split ratio.

5. The system for transmitting optical signals in an access network as set forth in claim 2, wherein said pre-splitter has a 1:4 split ratio.

6. The system for transmitting optical signals in an access network as set forth in claim 2, wherein said pre-splitter has a 1:8 split ratio.

7. The system for transmitting optical signals in an access network as set forth in claim 1, wherein said plurality of splitters and said pre-splitter are formed into an integrated module.

8. A system for integrating two optical carrier signals of different wavelengths in an access network, comprising;
a pre-splitter operable to condition a first optical carrier signal into a first plurality of waveguides;
at least one splitter coupled to said pre-splitter for conditioning one of said plurality of waveguides into a second plurality of waveguides;
a fiber bank for sourcing a second optical carrier signal onto a third plurality of waveguides; and
a wavelength division multiplexer (WDM) array coupled to said at least one splitter and said fiber bank for multiplexing said first and second optical carrier signals onto at least one access waveguide coupled to an optical network unit (ONU).

9. The system for integrating two optical carrier signals of different wavelengths in an access network as set forth in claim 8, wherein said pre-splitter is detachable.

10. The system for integrating two optical carrier signals of different wavelengths in an access network as set forth in claim 9, wherein said at least one splitter forms an integrated multiplexer module with said WDM array, wherein said second plurality of waveguides are spliced to said WDM array via a ribbon-to-ribbon splicer.

11. The system for integrating two optical carrier signals of different wavelengths in an access network as set forth in claim 10, wherein said pre-splitter is integrated with said multiplexer module to form a pre-splitter/multiplexer module.

12. The system for integrating two optical carrier signals of different wavelengths in an access network as set forth in claim 10, wherein said at least one splitter has a 1:16 split ratio.

13. The system for integrating two optical carrier signals of different wavelengths in an access network as set forth in claim 10, wherein said WDM array has a 2:1 ratio.

14. The system for integrating two optical carrier signals of different wavelengths in an access network as set forth in claim 10, wherein said pre-splitter has a 1:4 ratio.

15. The system for integrating two optical carrier signals of different wavelengths in an access network as set forth in claim 10, wherein said first optical carrier signal is operable at around 1550 nm and capable of carrying point-to-multipoint information.

16. The system for integrating two optical carrier signals of different wavelengths in an access network as set forth in claim 15, wherein said point-to-multipoint information comprises analog video information.

17. The system for integrating two optical carrier signals of different wavelengths in an access network as set forth in claim 10, wherein said second optical carrier signal is operable at around 1310 nm and capable of carrying point-to-point information.

18. The system for integrating two optical carrier signals of different wavelengths in an access network as set forth in claim 17, wherein said point-to-point information comprises digital telephony information.

19. A system for integrating a first optical carrier signal carrying point-to-multipoint information with a second optical carrier signal carrying point-to-point information in an access network, comprising:
a pre-splitter operable to condition said first optical carrier signal into a first plurality of waveguides;
at least one splitter coupled to said pre-splitter for conditioning one of said first plurality of waveguides into a second plurality of waveguides organized as a first ribbon fiber;
a fiber bank for sourcing said second optical carrier signal via a second ribbon fiber; and
a WDM array spliced to said first and second ribbon fibers for multiplexing said first and second optical carrier signals onto at least one common access waveguide coupled to an ONU.

20. The system for integrating a first optical carrier signal carrying point-to-multipoint information with a second optical carrier signal carrying point-to-point information in an access network as set forth in claim 19, wherein said splitter and said WDM array are formed into an integrated multiplexer module.

21. The system for integrating a first optical carrier signal carrying point-to-multipoint information with a second optical carrier signal carrying point-to-point information in an access network as set forth in claim 20, wherein said pre-splitter is integrated with said multiplexer module to form a pre-splitter/multiplexer module.

22. The system for integrating a first optical carrier signal carrying point-to-multipoint information with a second optical carrier signal carrying point-to-point information in an access network as set forth in claim 21, wherein said pre-splitter/multiplexer module is comprised of a silicon planar light wave circuit.

23. The system for integrating a first optical carrier signal carrying point-to-multipoint information with a second optical carrier signal carrying point-to-point information in an access network as set forth in claim 20, wherein said WDM array is integrally spliced to said first ribbon fiber and said second ribbon fiber by ribbon splicers.

24. The system for integrating a first optical carrier signal carrying point-to-multipoint information with a second optical carrier signal carrying point-to-point information in an access network as set forth in claim 23, wherein said first optical carrier signal is operable at around 1550 nm.

25. The system for integrating a first optical carrier signal carrying point-to-multipoint information with a second optical carrier signal carrying point-to-point information in an access network as set forth in claim 23, wherein said second optical carrier signal is operable at around 1310 nm.

26. The system for integrating a first optical carrier signal carrying point-to-multipoint information with a second optical carrier signal carrying point-to-point information in an access network as set forth in claim 23, wherein said splitter has a 1:16 split ratio.

27. The system for integrating a first optical carrier signal carrying point-to-multipoint information with a second optical carrier signal carrying point-to-point information in an access network as set forth in claim 23, wherein said WDM array has a 2:1 ratio.

28. The system for integrating a first optical carrier signal carrying point-to-multipoint information with a second optical carrier signal carrying point-to-point information in an access network as set forth in claim 23, wherein said second plurality of waveguides comprises 16 waveguides arranged into two portions of eight waveguides each.

29. The system for integrating a first optical carrier signal carrying point-to-multipoint information with a second optical carrier signal carrying point-to-point information in an access network as set forth in claim 23, wherein said second ribbon fiber is comprised of 16 waveguides arranged into two portions of eight waveguides each.

30. The system for integrating a first optical carrier signal carrying point-to-multipoint information with a second optical carrier signal carrying point-to-point information in an access network as set forth in claim 23, wherein said point-to-multipoint information comprises analog video information.

31. The system for integrating a first optical carrier signal carrying point-to-multipoint information with a second optical carrier signal carrying point-to-point information in an access network as set forth in claim 23, wherein said point-to-point information comprises digital telephony information.

32. A method for combining first and second optical carrier signals with different wavelengths onto a common access waveguide at a predetermined output power level, comprising the steps of:
receiving said first optical carrier signal from a first source;
amplifying said first optical signal using an optical fiber amplifier (OFA) to a predetermined level;
pre-splitting said first optical signal into a plurality of waveguides using a pre-splitter;
conditioning one of said waveguides from said pre-splitter into a plurality of waveguides organized on a first ribbon fiber; and
multiplexing said first optical carrier signal on said first ribbon fiber with a second optical carrier signal on a second ribbon fiber onto said common access waveguide at said predetermined output power level.

33. The method for combining first and second optical carrier signals with different wavelengths onto a common access waveguide at a predetermined output power level as set forth in claim 32, wherein said one of said plurality of waveguides is conditioned by a splitter.

34. The method for combining first and second optical carrier signals with different wavelengths onto a common access waveguide at a predetermined output power level as set forth in claim 32, wherein said one of said plurality of waveguides is conditioned by another pre-splitter.

35. The method for combining first and second optical carrier signals with different wavelengths onto a common access waveguide at a predetermined output power level as set forth in claim 32, wherein said first optical carrier signal is operable at around 1550 nm.

36. The method for combining first and second optical carrier signals with different wavelengths onto a common access waveguide at a predetermined output power level as set forth in claim 32, wherein said second optical carrier signal is operable at around 1310 nm.
